# EUROPEAN PATENT SPECIFICATION

(11) **EP 2 620 300 B1**
(45) Date of publication and mention of the grant of the patent: **02.07.2014**
(21) Application number: 13152136.1
(22) Date of filing: 22.01.2013
(51) Int. Cl.: B60C 11/03, B60C 9/00

(54) **Pneumatic tire and method of manufacturing the same**
Luftreifen und Verfahren zu dessen Herstellung
Pneumatique et son procédé de fabrication

(30) Priority: 26.01.2012 JP 2012014457
(43) Date of publication of application: 31.07.2013
(73) Proprietor: Sumitomo Rubber Industries, Ltd., Kobe-shi Hyogo 651-0072 (JP)
(72) Inventor: Morozumi, Junichiro, Kobe-shi, Hyogo 651-0072 (JP)
(74) Representative: TBK

(56) References cited:
- EP-A1- 2 261 063
- JP-A- 2002 029 212
- US-A- 3 734 157

## Description

### BACKGROUND OF THE INVENTION

### Field of the Invention

The present invention relates to a pneumatic tire having improved durability and uniformity and a method of manufacturing the same.

### Description of the Background Art

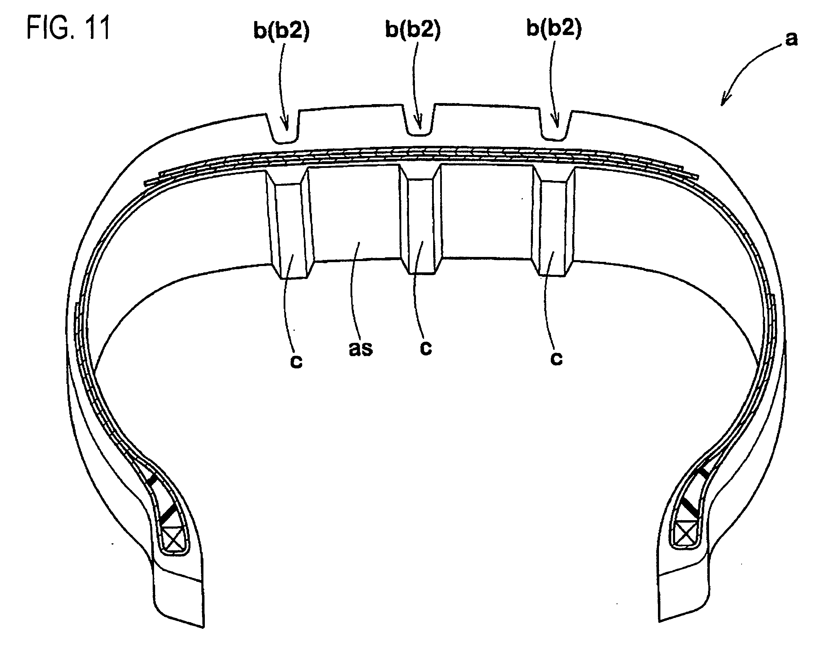

Japanese Laid-Open Patent Publication No. 2010-285113 discloses a pneumatic tire with the features according to the preamble of claim 1 and proposes that as shown in FIG 11, in a pneumatic tire in which tread grooves b are formed on an outer surface of a tread portion a, inward ribs c are provided on an inner surface as of the tread portion a and in regions inward of the tread grooves b in a tire radial direction so as to project inwardly in the tire radial direction and extend along the tread grooves b.

In the tire, the inward ribs c supplement the gauge thicknesses below the tread grooves b to suppress reduction of the rigidity below the tread grooves b. As a result, during rolling of the tire, concentration of strains on the groove bottoms can be alleviated, and occurrence of cracks at the groove bottoms can be suppressed. In addition, reduction of the rigidity below the tread grooves is suppressed, and the rigidity of the tread portion is close to a uniform state. Thus, the inward ribs c can contribute to improvement of the uniformity of the tire.

However, as a result of studying, the inventor of the present invention has found out that the inward ribs c do not exert a sufficient effect on axial grooves extending in a direction intersecting a tire circumferential direction and there is room for improvement in crack resistance and uniformity.

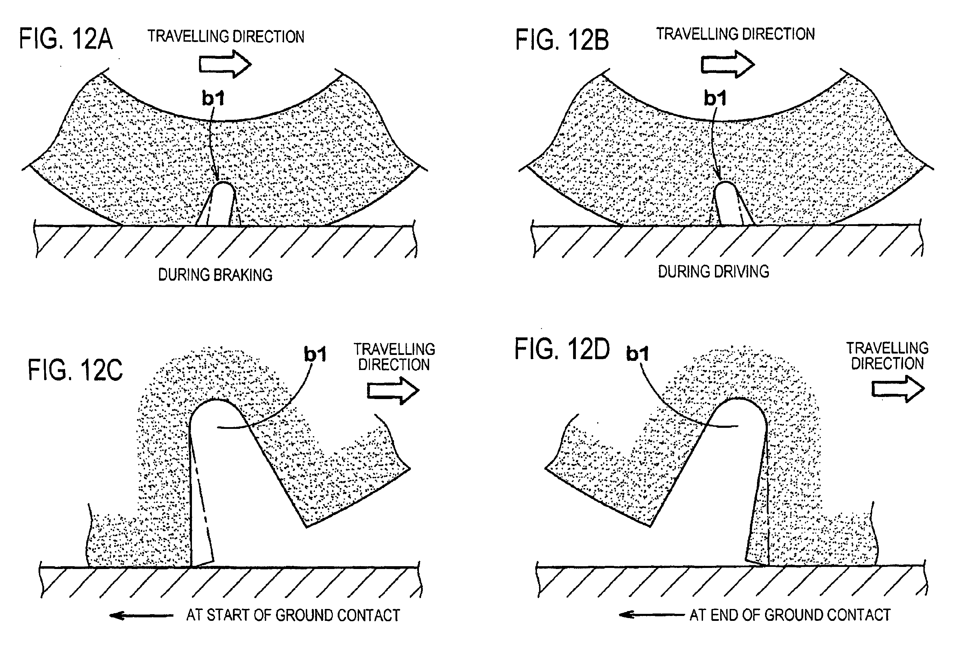

Specifically, when the tire rolls, great forces are applied to a ground-contact portion in a forward/backward direction during braking and during driving as shown in FIGS. 12A and 12B. Thus, in an axial groove b1, its cross-sectional shape greatly changes in the forward/backward direction, and a great strain occurs at the groove bottom. In addition, as shown in FIGS. 12C and 12D, in the axial groove b1, "at start of ground contact" and "at end of ground contact", deformation repeatedly occurs in directions in which the groove width is increased and decreased, and a great strain occurs at the groove bottom. As described above, as compared to a circumferential groove b2 (shown in FIG 11), deformation of the axial groove b1 is great and a strain occurring at the groove bottom is great.

However, when the inward ribs c are formed along the axial grooves b1, a reinforcing effect with respect to the forward/backward direction is small. Thus, the crack resistance at the bottoms of the axial grooves b1 is insufficient. In addition, the difference between the rigidity below each axial groove b1 and the rigidity between each axial groove b1 in the forward/backward direction is still great, and thus improvement of the uniformity is also insufficient.

Further relevant background art is disclosed in documents JP 2002 029 212 A and US 3 734 157 A.

### SUMMARY OF THE INVENTION

Therefore, an object of the present invention is to provide a pneumatic tire with the features of claim 1 in which an inward rib is basically arranged in a direction intersecting an axial groove, which allows rigidity below the axial groove in a forward/backward direction to be increased, which suppresses occurrence of a strain at a groove bottom to enhance crack resistance, and which allows a difference in rigidity in the forward/backward direction to be decreased to improve the uniformity of the tire; and a method of manufacturing the same.

In order to solve the above problem, a first aspect of the invention is a pneumatic tire in which a plurality of axial grooves are arranged on an outer surface of a tread portion so as to be spaced apart from each other in a tire circumferential direction and extend in a direction intersecting the tire circumferential direction. A rib-forming region including at least one inward rib which projects from an inner surface of the tread portion inwardly in a tire radial direction and extends in a direction intersecting the axial grooves and across axial groove-inward regions inward of the axial grooves in the tire radial direction is provided in the inner surface of the tread portion. An intersection angle θ of the inward rib with respect to each axial groove ranges from 45° to 90°.

In a second aspect, each axial groove is a shoulder axial groove extending from an outer side of a tread ground-contact edge in a tire axial direction beyond the tread ground-contact edge towards a tire equator side.

In a third aspect, the inward rib is a circumferential rib extending along an entire circumference of the tire in the tire circumferential direction, and a plurality of the circumferential ribs are arranged in the rib-forming region so as to be spaced apart from each other in the tire axial direction.

In a fourth aspect, the inward rib is an inclined rib extending so as to be inclined at an angle α with respect to the tire circumferential direction which is not greater than 45°, and a plurality of the inclined ribs are arranged in the rib-forming region so as to be spaced apart from each other in the tire axial direction.

In a fifth aspect, the inward rib is a spiral rib extending in a spiral manner in the tire circumferential direction, and the single spiral rib is wound in the rib-forming region a plurality of times.

In a sixth aspect, a projection height Hr of the inward rib from the inner surface is 2.5 to 7.5 mm.

In a seventh aspect, a rib width Wr of the inward rib is 2.5 to 7.5 mm.

An eighth aspect is a method of manufacturing the pneumatic tire according to any one of the aspects 1 to 8. The method includes the steps of: sequentially attaching unvulcanized tire components onto a rigid core to form a green tire; and putting the green tire together with the rigid core into a vulcanization mold, and vulcanizing and shaping the green tire therein. The rigid core has, on an outer surface thereof, a rib-forming groove for forming the inward rib.

It should be noted that the "tread ground-contact edge" means an outermost position in the tire axial direction on a tread ground-contact surface which contacts the ground when a normal load is applied to a tire which is in a normal internal pressure condition in which the tire is mounted on a normal rim and inflated to a normal internal pressure.

The "normal rim" is a rim specified for every tire by each standard in a standardizing system including standards on which tires are based, and means, for example, a standard rim in the JATMA standard, a "Design Rim" in the TRA standard, and a "Measuring Rim" in the ETRTO standard. Also, the "normal internal pressure" is an air pressure specified for every tire by each standard in the standardizing system, and means, for example, a maximum air pressure in the JATMA standard, a maximum value recited in the table of "TIRE LOAD LIMITS AT VARIOUS COLD INFLATION PRESSURES" in the TRA standard, and an "INFLATION PRESSURE" in the ETRTO standard. In the case of a tire for a passenger car, the "normal internal pressure" is 180 kPa. The "normal load" is a load specified for every tire by each standard, and means a maximum load capacity in the JATMA standard, and a maximum value recited in the table of "TIRE LOAD LIMITS AT VARIOUS COLD INFLATION PRESSURES" in the TRA standard, and a "LOAD CAPACITY" in the ETRTO standard.

In the present specification, unless otherwise specified, the dimension or the like of each portion of the tire is a value identified in the above normal internal pressure condition.

As described above, according to the present invention, in the pneumatic tire in which a plurality of the axial grooves are provided on the outer surface of the tread portion, at least one inward rib is provided so as to project from the inner surface of the tread portion. Furthermore, the inward rib extends in the direction intersecting the axial grooves and across the axial groove-inward regions inward of the axial grooves in the tire radial direction.

Such an inward rib can exert a great effect of reinforcing portions below the axial grooves in the forward/backward direction as compared to the case where an inward rib is formed along the axial groove, and can enhance the rigidity below the axial grooves in the forward/backward direction. As a result, groove deformation specific to the axial grooves during braking, during driving, at start of ground contact, at end of ground contact, and the like can be suppressed, occurrence of strains at the groove bottoms can be suppressed, and the crack resistance can be improved. In other words, the durability can be improved.

In addition, the difference between the rigidity below each axial groove and the rigidity between each axial groove in the forward/backward direction is reduced, and the rigidity is made further uniform in the circumferential direction. Thus, the uniformity can be improved.

### BRIEF DESCRIPTION OF THE DRAWINGS

FIG. 1 is a cross-sectional view showing an embodiment of a pneumatic tire according to the present invention;
FIG. 2 is a development showing a tread pattern;
FIG. 3 is a development of a formed state of inward ribs as seen from an inner surface side;
FIG. 4 is a cross-sectional view of a tread portion for illustrating axial groove-inward regions;
FIGS. 5A to 5C are cross-sectional views showing cross-sectional shapes of inward ribs;
FIGS. 6A and 6B are developments of other embodiments of inward ribs as seen from an inner surface side;
FIG. 7 is a cross-sectional view illustrating a green tire forming process in a method of manufacturing the pneumatic tire according to the present invention.
FIG. 8 is a cross-sectional view illustrating a vulcanizing process;
FIGS. 9A and 9B are a perspective view and a side view of a main part of a rigid core used for the vulcanizing process;
FIG. 10 is an enlarged cross-sectional view showing an example of a rib-forming rubber charging step in the green tire forming process;
FIG. 11 is a partial perspective view of a pneumatic tire showing conventional inward ribs; and
FIGS. 12A to 12D are partial cross-sectional views illustrating a deformed state of an axial groove during rolling of a tire.

### DESCRIPTION OF THE PREFERRED EMBODIMENTS

Hereinafter, an embodiment of the present invention will be described in detail.

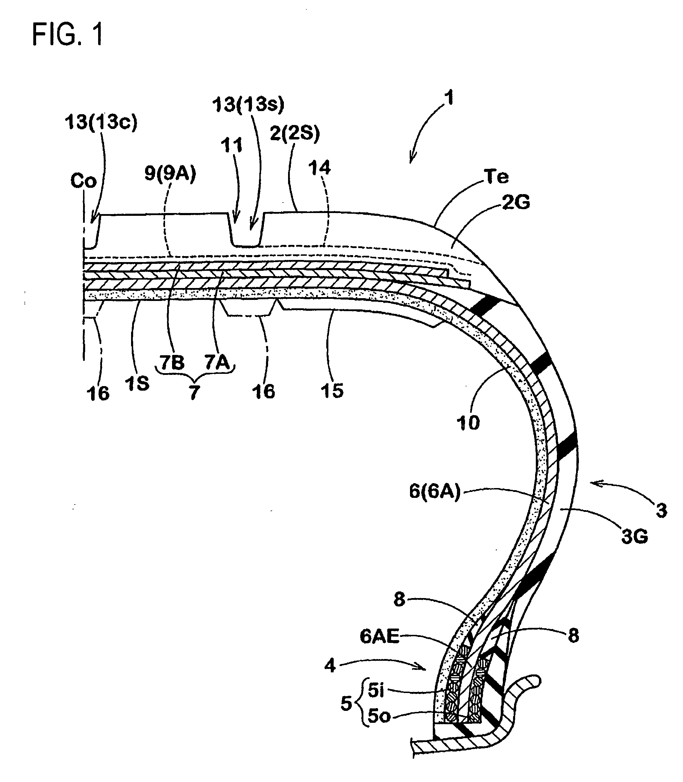

As shown in FIG. 1, a pneumatic tire 1 according to the present embodiment includes a tread portion 2, sidewall portions 3, bead portions 4, a carcass 6 extending from the tread portion 2 through the sidewall portions 3 to the bead portions 4, and a belt layer 7 disposed radially outward of the carcass 6 and inward of the tread portion 2.

The carcass 6 is formed of at least one carcass ply, one carcass ply 6A in the present embodiment, in which carcass cords are radially arranged. The carcass ply 6A extends between the bead portions 4 in a troidal shape, and both edge portions 6AE thereof are sandwiched and retained within bead cores 5 disposed in the bead portions 4, without being turned up around the bead cores 5 in the present embodiment. Specifically, each bead core 5 includes inner and outer core pieces 5i and 5o in a tire axial direction. Each edge portion 6AE of the carcass ply 6A is retained between the inner and outer core pieces 5i and 5o.

Each of the inner and outer core pieces 5i and 5o is formed by winding a non-stretchable bead wire in a spiral manner in a tire circumferential direction. In this case, the number of times of winding the bead wire for the outer core piece 5o is preferably, for example, about 1.2 to 2.0 times that for the inner core piece 5i such that the rigidity of the outer core piece 5o is higher than that of the inner core piece 5i. This can relatively enhance the flexural rigidity of each bead portion 4 while restricting the total number of times of winding the bead wire, and helps with improvement of steering stability and the like. Reference character 8 in the drawings denotes bead apex rubbers formed from a hard rubber having a rubber hardness of, for example, 80 to 100 degrees, and each bead apex rubber extends from each of the core pieces 5i and 5o in a tapered manner and enhances the bead rigidity. In the present specification, a rubber hardness means a durometer A hardness measured with a type A durometer in the environment at 23°C according to JIS-K6253.

The belt layer 7 is formed of at least one belt ply, two belt plies 7A and 7B in the present embodiment, in which belt cords are arranged at a cord angle of, for example, 10° to 35° with respect to the tire circumferential direction. In the belt layer 7, each belt cord of the ply 7A or 7B intersects that of the other ply, whereby the belt rigidity is enhanced and the tread portion 2 is firmly reinforced across substantially the entire width thereof with a hoop effect.

In the present embodiment, a band layer 9 is disposed radially outward of the belt layer 7. The band layer 9 is formed of a band ply 9A in which a band cord is wound in a spiral manner in the tire circumferential direction. As the band ply 9A, a pair of left and right edge band plies which cover only outer edge portions of the belt layer 7 in the tire axial direction or a full band ply which covers the entire width of the belt layer 7 can be used as appropriate. In the present embodiment, the case is shown where the band layer 9 is formed of a single full band ply.

A thin inner liner 10 forming an inner surface 1S of the tire is disposed inward of the carcass 6. The inner liner 10 is formed from a non-air-permeable rubber such as butyl rubber and halogenated butyl rubber and hermetically retains air charged into the inner cavity of the tire. In addition, sidewall rubbers 3G forming outer surfaces of the sidewall portions 3 are disposed outward of the carcass 6, and a tread rubber 2G forming an outer surface 2S of the tread portion 2 is disposed radially outward of the band layer 9.

A tread pattern composed of tread grooves 11 is formed on the outer surface 2S (hereinafter, may be referred to as tread surface 2S) of the tread portion 2.

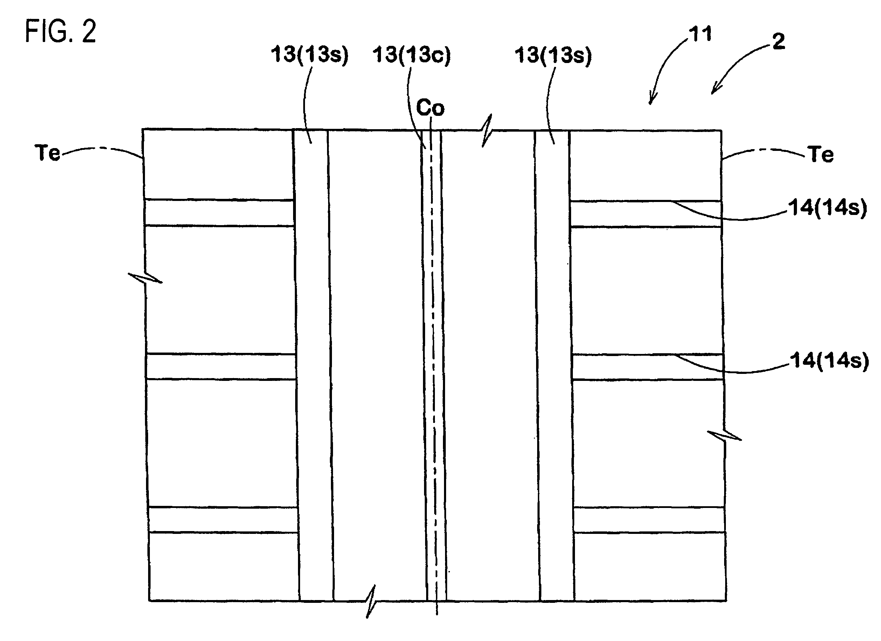

In the present embodiment, as shown in FIG. 2, the tread grooves 11 include circumferential grooves 13 continuously extending in the tire circumferential direction and a plurality of axial grooves 14 extending in a direction intersecting the tire circumferential direction. The case is shown where the circumferential grooves 13 include a pair of shoulder circumferential grooves 13s disposed on the outermost side in the tire axial direction and at least one center circumferential groove 13c (one center circumferential groove in the present embodiment) disposed inward of the shoulder circumferential grooves 13s in the tire axial direction. Thus, the tread portion 2 in the present embodiment is divided into shoulder land portions outward of the shoulder circumferential grooves 13s in the tire axial direction and center land portions between the circumferential grooves 13.

It should be noted that the groove width and the groove depth of each circumferential groove 13 are not particularly limited, and conventional ranges thereof can be used as appropriate. For example, in the case of a tire for a passenger car, a groove width of about 5 to 15 mm and a groove depth of about 6 to 15 mm can suitably be used. As the circumferential grooves 13, other than the straight grooves in the present embodiment, zigzag grooves are also suitably used.

In the present embodiment, the axial grooves 14 are formed in the shoulder land portions. In other words, the axial grooves 14 in the present embodiment are formed as shoulder axial grooves 14s which extend from the outer side of a tread ground-contact edge Te in the tire axial direction beyond the tread ground-contact edge Te to a tire equator Co side and are arranged so as to be spaced apart from each other in the tire circumferential direction. The shoulder axial grooves 14s are connected at their inner ends to the shoulder circumferential grooves 13s, thereby dividing each shoulder land portion into a plurality of blocks. However, the shoulder axial grooves 14s may terminate at their inner ends within the shoulder land portions. It should be noted that the axial grooves 14 can also be formed in the center land portions, or the axial grooves 14 can also be formed in both the shoulder land portions and the center land portions. The groove width and the groove depth of each axial groove 14 are also not particularly limited, and conventional ranges thereof can be used as appropriate. For example, in the case of a tire for a passenger car, a groove width of about 3 to 10 mm and a groove depth of about 6 to 15 mm can suitably be used.

In the tire 1 according to the present embodiment, rib-forming regions Y each of which includes at least one inward rib 15 projecting from the inner surface 1S inwardly in the tire radial direction are provided in the inner surface 1S of the tread portion 2.

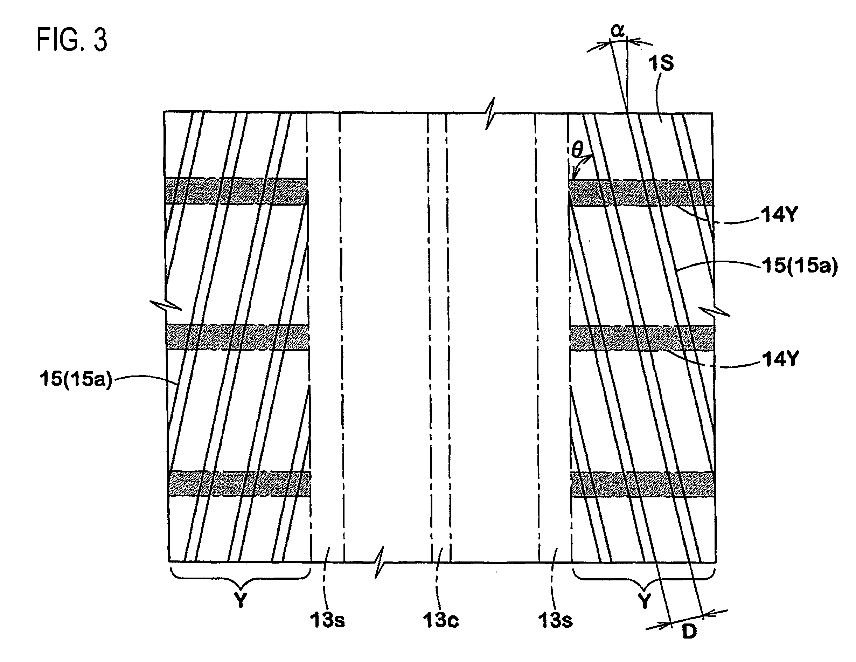

As shown in FIG. 3, each inward rib 15 extends in a direction intersecting the axial grooves 14 and across axial groove-inward regions 14Y inward of the axial grooves 14 in the tire radial direction. In the present embodiment, each inward rib 15 is an inclined rib 15a extending so as to be inclined at an angle α with respect to the tire circumferential direction, and the case is shown where a plurality of inclined ribs 15a are arranged in each rib-forming region Y so as to be spaced apart from each other in the tire axial direction.

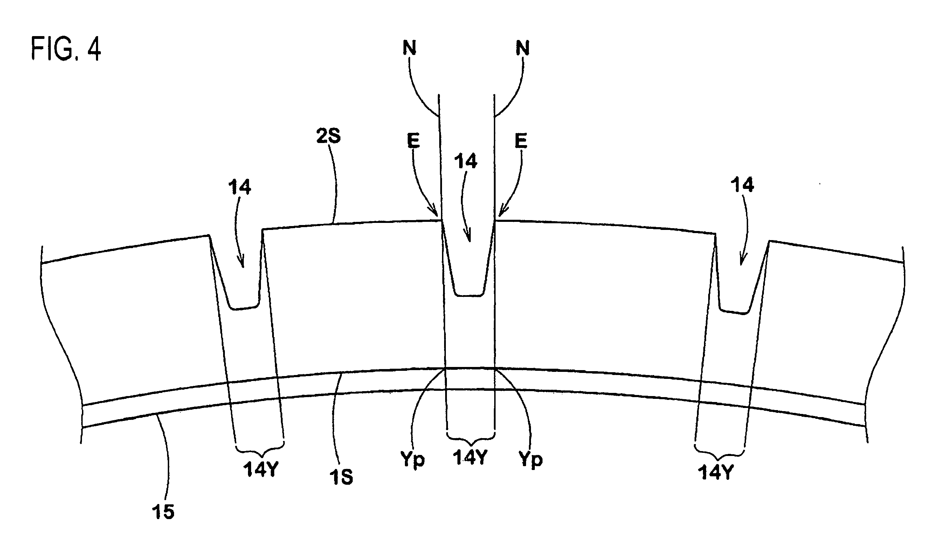

Here, each axial groove-inward region 14Y means a region between positions Yp at which normal lines N to the tread surface 2S at groove side edges E intersect the inner surface 1S, where the groove side edges which are the edge lines at which the groove wall surface of the axial groove 14 intersects the tread surface 2S are E as shown in FIG. 4. Therefore, the axial groove-inward regions 14Y are formed in substantially the same shapes as the axial grooves 14.

Such inward ribs 15 exert a great effect of reinforcing portions below the axial grooves 14 in the forward/backward direction, and thus can enhance the rigidity below the axial grooves 14 in the forward/backward direction. As a result, groove deformation specific to the axial grooves 14 during braking, during driving, at start of ground contact, at end of ground contact, and the like can be effectively suppressed, occurrence of strains at the groove bottoms can be suppressed, and the crack resistance can be improved. In addition, the difference between the rigidity below each axial groove 14 and the rigidity between each axial groove 14 in the forward/backward direction is reduced, and the rigidity of the tread portion 2 can be made further uniform in the circumferential direction. Thus, the uniformity can be further improved.

If the inward ribs 15 are too small in size, the reinforcing effect is insufficient. On the other hand, if the inward ribs 15 are too large in size, the inward ribs 15 make the tread rigidity non-uniform, causing deterioration of the uniformity. From this standpoint, the projection height Hr of each inward rib 15 from the inner surface 1S is preferably 2.5 to 7.5 mm, and the rib width Wr of each inward rib 15 is preferably 2.5 to 7.5 mm.

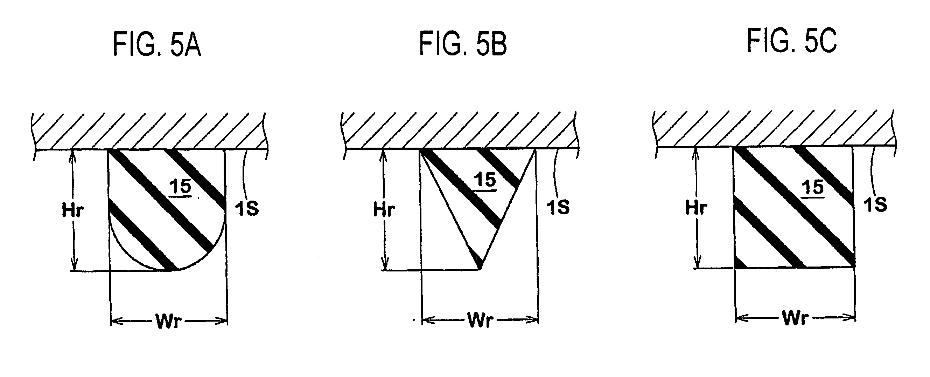

As a cross-sectional shape of each inward rib 15 perpendicular to its longitudinal direction, for example, a substantially semi-circular shape as shown in FIG. 5(A), a triangular cross-sectional shape as shown in FIG. 5 (B), and a square cross-sectional shape as shown in FIG. 5 (C) can suitably be used. However, when the projection height Hr and the rib width Wr are common, the triangular cross-sectional shape has a smaller cross-sectional area than that of the substantially semi-circular shape, and is disadvantageous in crack resistance and the like since the reinforcing effect is inferior and the strain is great. In addition, the square cross-sectional shape has a larger cross-sectional area than that of the substantially semi-circular shape, resulting in weight increase. Thus, the square cross-sectional shape is disadvantageous in uniformity, for example, the tread surface 2S tends to wave due to a centrifugal force during rolling of the tire. Therefore, the substantially semi-circular shape can most suitably be used.

It should be noted that each inward rib 15 can be formed from a rubber having the same composition as that of the inner liner 10, but can also be formed from a rubber having a different composition from that of the inner liner 10. In particular, from the standpoint of the reinforcing effect, a rubber having a rubber hardness of 65 to 95 degrees can more suitably be used.

The angle α of each inward rib 15 with respect to the tire circumferential direction is preferably not greater than 45°. If the angle α exceeds 45°, the reinforcing effect in the forward/backward direction is insufficient, and the effect of improving the crack resistance of the axial grooves 14 and the uniformity cannot sufficiently be exerted. From this standpoint, the angle α is more preferably not greater than 30°.

In addition, the intersection angle θ of each inward rib 15 with respect to each axial groove 14 preferably ranges from 45° to 90°. If the intersection angle θ is less than 45°, deformation of each axial groove 14 cannot sufficiently be suppressed, and the effect of improving the crack resistance and the uniformity is insufficient. From this standpoint, the intersection angle θ is more preferably not less than 60°.

As in the present embodiment, a plurality of the inward ribs 15 are preferably formed in each rib-forming region Y. In this case, the distance D between the adjacent inward ribs 15 (the distance D in a direction perpendicular to the longitudinal direction of each inward rib 15) preferably ranges from 5 to 30 mm. If the distance D is less than 5 mm, the entirety of each rib-forming region Y cannot be reinforced, for example, the reinforcing effect is locally exerted, and the effect of improving the crack resistance and the uniformity is insufficient. In addition, if the distance D exceeds 30 mm, the reinforcing effect tends to be insufficient between each inward rib 15, and the effect of improving the crack resistance and the uniformity is insufficient. From this standpoint, the lower limit of the distance D is more preferably 10 mm, and the upper limit of the distance D is more preferably 20 mm.

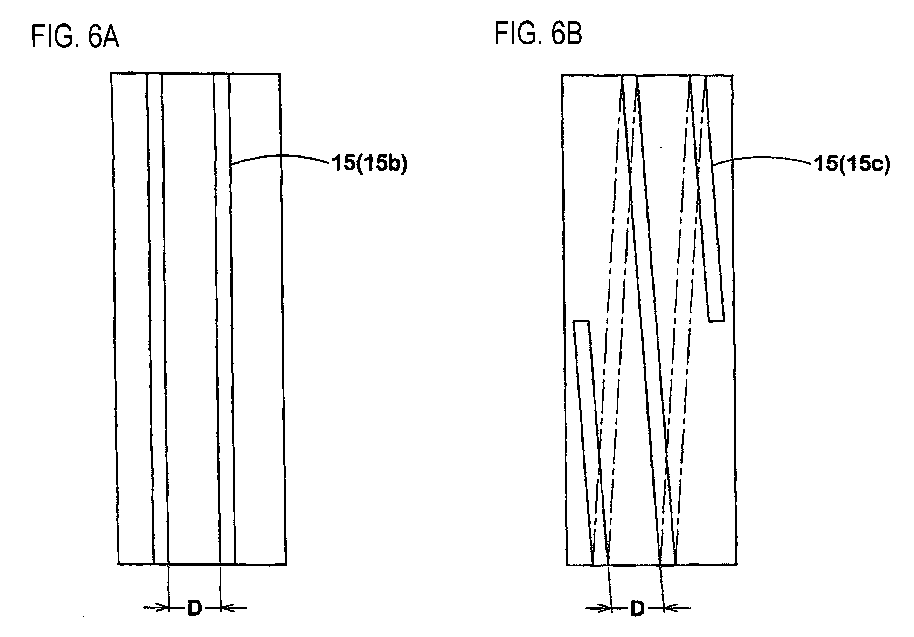

FIGS. 6A and 6B show other embodiments of the inward ribs 15. Each inward rib 15 in FIG. 6A is a circumferential rib 15b extending along the entire circumference of the tire in the tire circumferential direction, and a plurality of the circumferential ribs 15b (two in the present embodiment) are arranged in each rib-forming region Y so as to be spaced apart from each other in the tire axial direction. In this case as well, the distance D between the adjacent inward ribs 15 (the distance D in the direction perpendicular to the longitudinal direction of each inward rib 15) preferably ranges from 5 to 30 mm.

In addition, an inward rib 15 in FIG. 6(B) is a spiral rib 15c extending in a spiral manner in the tire circumferential direction, and the single spiral rib 15c is wound a plurality of times (twice in the present embodiment) in each rib-forming region Y. In this case as well, the distance D between adjacent wound portions (the distance D in the direction perpendicular to the longitudinal direction of the inward rib 15) preferably ranges from 5 to 30 mm.

It should be noted that in the pneumatic tire 1, inward ribs 16 for circumferential grooves (indicated by alternate long and short dash lines in FIG. 1) can be further provided on the inner surface 1 S and in circumferential groove-inward regions inward of the circumferential grooves 13 in the tire radial direction so as to project inwardly in the tire radial direction and extend along the circumferential grooves 13, as described in Japanese Laid-Open Patent Publication No. 2010-285113.

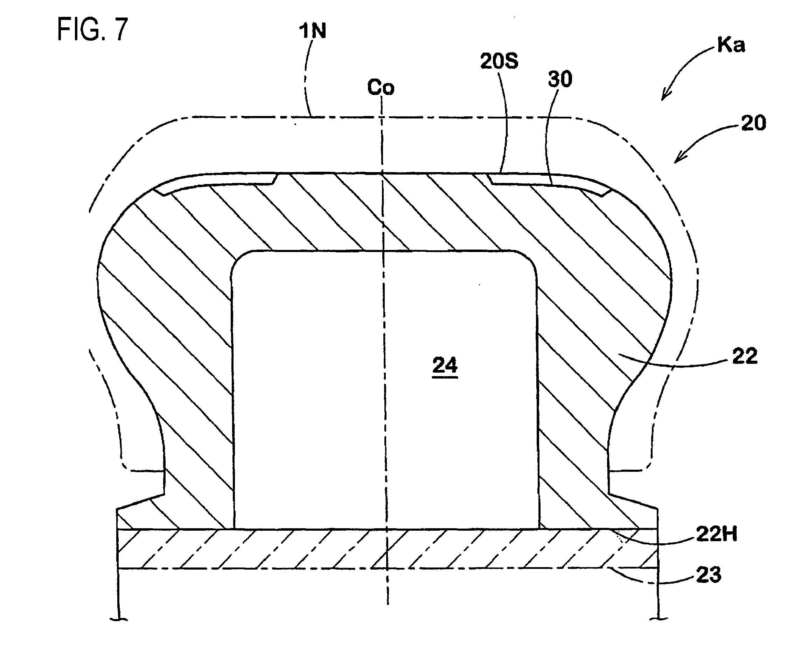

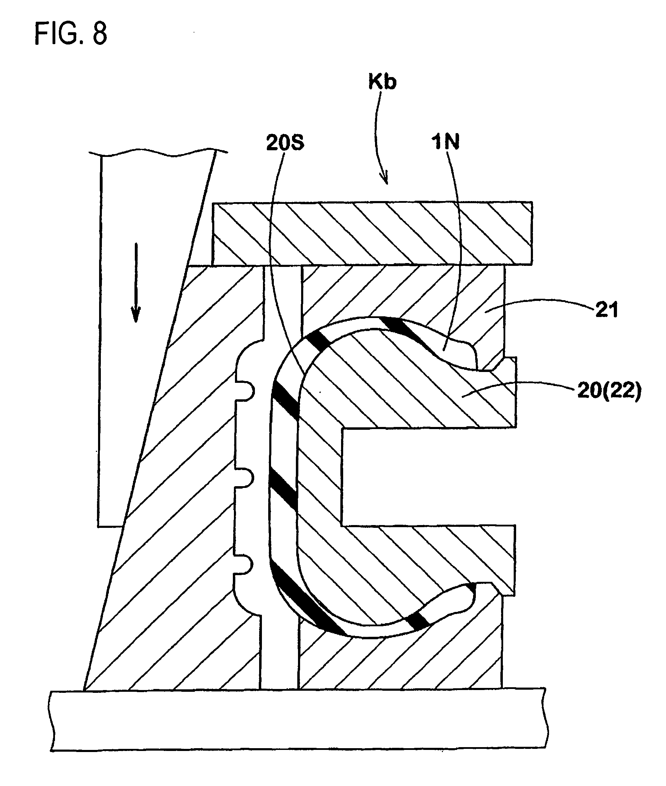

Next, an example of a method of manufacturing the pneumatic tire 1 according to the present embodiment will be described. The manufacturing method includes: a green tire forming process Ka of forming a green tire 1N into a shape close to that of the pneumatic tire 1 by sequentially attaching tire components (in the present embodiment, the inner liner 10, the carcass ply 6A, the belt plies 7A and 7B, the band ply 9A, the bead apex rubbers 8, the sidewall rubbers 3G, the tread rubber 2G etc. which are unvulcanized) onto an outer surface of a rigid core 20 as schematically shown in FIG. 7; and a vulcanizing process Kb of putting the green tire 1N together with the rigid core 20 into a vulcanization mold 21 and vulcanizing and shaping the green tire 1N therein as schematically shown in FIG. 8.

It should be noted that the outer surface of the rigid core 20 has a tire-forming surface portion 20S substantially corresponding to the shape of the inner surface 1S of the pneumatic tire 1, and the tire components are sequentially attached onto the tire-forming surface portion 20S.

The rigid core 20 includes a core body 22 and a cylindrical core piece 23 inserted into a center hole 22H of the core body 22.

The core body 22 in the present embodiment is formed in a hollow shape having therein an inner cavity portion 24 coaxial with the core body 22, and, for example, a heating means (not shown) such as an electrical heater for heating the inside of the green tire 1N is disposed within the inner cavity portion 24.

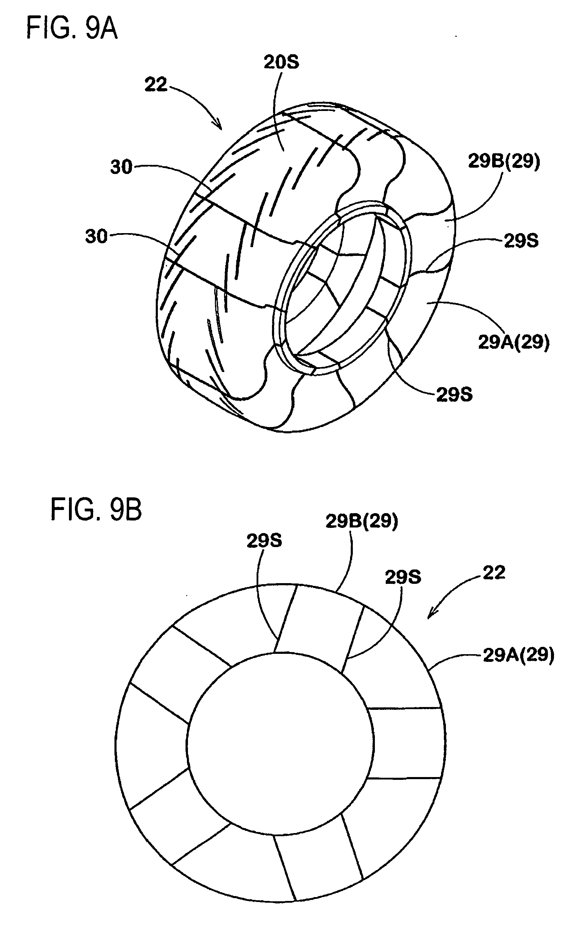

The core body 22 is formed of a plurality of core segments 29 separable in the tire circumferential direction, as shown in FIGS. 9A and 9B. The core segments 29 include first core segments 29A in which division surfaces 29S on both edges in the circumferential direction are inclined in such a direction as to decrease the circumferential width toward the radially inner side; and second core segments 29B which are arranged alternately with the first core segments 29A in the circumferential direction and in which division surfaces 29S on both edges in the circumferential direction are inclined in such a direction as to increase the circumferential width toward the radially inner side. Thus, the core segments 29 can be moved toward the radially inner side in order from the second core segments 29B, and are sequentially taken out through a bead hole of a finished tire after vulcanization and shaping, whereby the core body 22 can be disassembled. It should be noted that the core piece 23 serves to block movement of each core segment 29 toward the radially inner side to integrally connect each core segment 29.

On the outer surface (the tire-forming surface portion 20S) of the core body 22, rib-forming grooves 30 for forming the inward ribs 15 are formed.

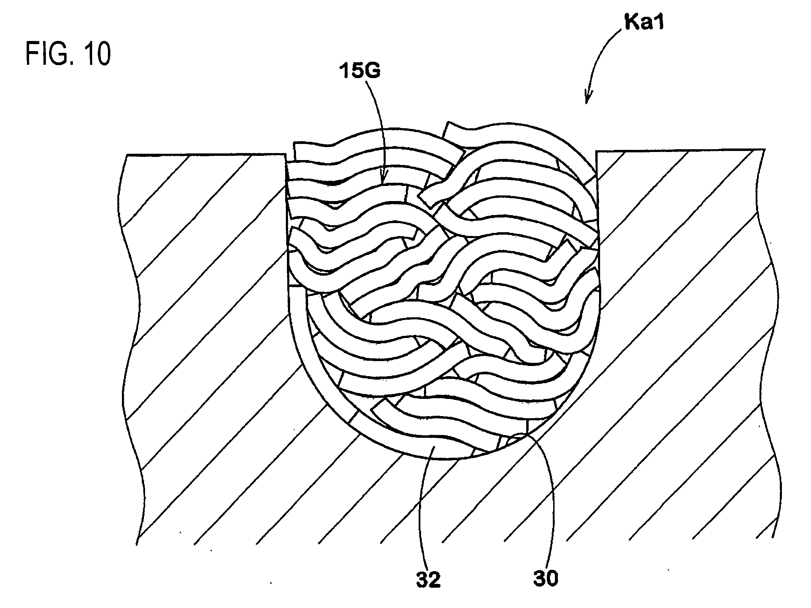

The green tire forming process Ka includes a rib-forming rubber charging step Ka1 of charging an unvulcanized rubber member 15G for forming inward ribs into the rib-forming grooves 30 as shown in FIG. 10. In the rib-forming rubber charging step Ka1 in the present embodiment, a long and band-shaped rubber strip 32 is used, and the rubber member 15G is formed by spirally winding the rubber strip 32 in an overlapping manner. Other than this, the rubber member 15G can also be formed by winding, within the rib-forming groove 30 once, a rubber material which has a cross-sectional shape substantially corresponding to the rib-forming groove 30 and is formed by extrusion molding.

Although the particularly preferred embodiment of the present invention has been described in detail above, the present invention is not limited to the shown embodiment, and various modifications can be made to practice the present invention.

### EXAMPLES

In order to confirm the advantageous effects of the present invention, experimental pneumatic tires (a tire size of 225/50R16) which have the internal structure shown in FIG. 1 and have the tread pattern shown in FIG. 2 were manufactured on the basis of specifications in Table 1. Then, for each experimental tire, crack resistance at the bottom of each axial groove and uniformity were tested, and the results were compared.

The specifications other than those in Table 1 are substantially the same among the experimental tires, and main common specifications are as follows.
Widths of grooves in tire circumferential direction: 7.0 mm
Depths of grooves in tire circumferential direction: 8.2 mm
Widths of axial grooves: 5.0 mm
Depths of axial grooves: 8.0 mm

### (1) Crack resistance:

The experimental tires were allowed to stand in the sun for 500 days to prompt deterioration thereof. Then, each experimental tire was run on a drum tester at a speed of 100 km/h under the conditions of a rim size of 16 × 7.5 JJ; an internal pressure of 200 kPa; and a vertical load of 4.71 kN, and was evaluated during running until a crack occurred at the bottom of an axial groove. A result of the evaluation was indicated as an index with a result of Comparative Example 1 being set as 100. A higher value indicates that the result is more favorable.

### (2) Uniformity:

A radial force variation (RFV), a lateral force variation (LFV), a tangential force variation (TFV), static balance (SB), and dynamic balance (DB) were measured with a tire uniformity tester under the conditions of a rim size of 16 × 7.5 JJ; an internal pressure of 200 kPa; a speed of 10 km/h; and a vertical load of 4.71 kN, and a result of overall evaluation was indicated as an index with a result of Comparative Example 1 being set as 100. A higher value indicates that the result is more favorable.

**Table 1-1**

| | Comp. Ex. 1 | Ex. 1 | Ex. 2 | Ex. 3 | Ex. 4 | Comp. Ex. 2 |
|---|---|---|---|---|---|---|
| Inward rib | None | Presence | | | | |
| Cross-sectional shape | - | FIG 5A (semi-circular) | | | | |
| Type of rib | - | Circumferential rib | Inclined rib | | | |
| Projection height Hr (mm) | - | 5 | | | | |
| Rib width Wr (mm) | - | 5 | | | | |
| Intersection angle θ (degrees) | - | 90 | 60 | 45 | 22.5 | 0 |
| Angle α (degrees) | - | 0 | 30 | 45 | 67.5 | 90 |
| Interval D between ribs (mm) | - | 10 | | | | |
| | | | | | | |
| Crack resistance | 100 | 200 | 175 | 150 | 125 | 110 |
| Uniformity | 100 | 200 | 175 | 150 | 125 | 110 |

**Table 1-2**

| | Ex. 5 | Ex. 6 | Ex. 7 | Ex. 8 | Ex. 9 | Ex. 10 |
|---|---|---|---|---|---|---|
| Inward rib | Presence | | | | | |
| Cross-sectional shape | FIG 5A (semi-circular) | | | | | |
| Type of rib | Circumferential rib | | | | | |
| Projection height Hr (mm) | 5 | | | | | |
| Rib width Wr (mm) | 2.5 | 7.5 | 10 | 5 | | |
| Intersection angle θ (degrees) | 90 | | | | | |
| Angle α (degrees) | 0 | | | | | |
| Interval D between ribs (mm) | 10 | | | 5 | 10 | 20 |
| | | | | | | |
| Crack resistance | 125 | 200 | 200 | 175 | 200 | 150 |
| Uniformity | 125 | 150 | 100 | 175 | 200 | 150 |

**Table 1-3**

| | Ex. 11 | Ex. 12 | Ex. 13 | Ex.14 | Ex. 15 | Ex. 16 |
|---|---|---|---|---|---|---|
| Inward rib | Presence | | | | | |
| Cross-sectional shape | FIG 5B (triangular) | FIG. 5C (square) | FIG. 5A (semi-circular) | | | |
| Type of rib | Circumferential rib | | | | | Spiral rib |
| Projection height Hr (mm) | 5 | | 2.5 | 7.5 | 5 | |
| Rib width Wr (mm) | 5 | | 2.5 | 5 | | |
| Intersection angle θ (degrees) | 90 | | | | | About 90 |
| Angle α (degrees) | 0 | | | | | About 0 |
| Interval D between ribs (mm) | 10 | | | | 30 | 10 |
| | | | | | | |
| Crack resistance | 150 | 200 | 110 | 200 | 120 | 200 |
| Uniformity | 175 | 175 | 100 | 100 | 120 | 200 |

As shown in Table 1, it can be confirmed that in the tires of Examples, the crack resistance of the axial grooves and the uniformity are improved due to formation of the inward ribs.

In a pneumatic tire in which axial grooves are arranged on an outer surface of a tread portion so as to be spaced apart from each other in a tire circumferential direction, a rib-forming region including at least one inward rib which projects from an inner surface of the tread portion inwardly in a tire radial direction and extends in a direction intersecting the axial grooves and across axial groove-inward regions inward of the axial grooves in the tire radial direction is provided in the inner surface of the tread portion.

## Claims

1. A pneumatic tire (1) in which a plurality of axial grooves (14, 14s) are arranged on an outer surface (2S) of a tread portion (2) so as to be spaced apart from each other in a tire circumferential direction and extend in a direction intersecting the tire circumferential direction, wherein
a rib-forming region (Y) including at least one inward rib (15, 15a, 15b, 15c) which projects from an inner surface (1S) of the tread portion inwardly in a tire radial direction is provided in the inner surface of the tread portion, **characterized in that** the at least one inward rib (15, 15a, 15b, 15c) extends in a direction intersecting the axial grooves and across axial groove-inward regions (14Y) inward of the axial grooves in the tire radial direction and
an intersection angle θ of the inward rib with respect to each axial groove ranges from 45° to 90°.

2. The pneumatic tire according to claim 1, wherein each axial groove is a shoulder axial groove (14s) extending from an outer side of a tread ground-contact edge (Te) in a tire axial direction beyond the tread ground-contact edge towards a tire equator (Co) side.

3. The pneumatic tire according to any one of claims 1 to 2, wherein
the inward rib is a circumferential rib (15b) extending along an entire circumference of the tire in the tire circumferential direction, and
a plurality of the circumferential ribs are arranged in the rib-forming region so as to be spaced apart from each other in the tire axial direction.

4. The pneumatic tire according to any one of claims 1 to 23, wherein
the inward rib is an inclined rib (15a) extending so as to be inclined at an angle α with respect to the tire circumferential direction which is not greater than 45°, and
a plurality of the inclined ribs are arranged in the rib-forming region so as to be spaced apart from each other in the tire axial direction.

5. The pneumatic tire according to any one of claims 1 to 2, wherein
the inward rib is a spiral rib (15c) extending in a spiral manner in the tire circumferential direction, and
the single spiral rib is wound in the rib-forming region a plurality of times.

6. The pneumatic tire according to any one of claims 1 to 5, wherein a projection height Hr of the inward rib from the inner surface is 2.5 to 7.5 mm.

7. The pneumatic tire according to any one of claims 1 to 6, wherein a rib width Wr of the inward rib is 2.5 to 7.5 mm.

8. A method of manufacturing the pneumatic tire according to any one of claims 1 to 7, the method comprising the steps of:
sequentially attaching unvulcanized tire components onto a rigid core (20) to form a green tire (IN); and
putting the green tire together with the rigid core into a vulcanization mold (21), and vulcanizing and shaping the green tire therein, wherein
the rigid core has, on an outer surface thereof, a rib-forming groove for forming the inward rib.

## Patentansprüche

1. Luftreifen (1), in dem eine Vielzahl von axialen Nuten (14, 14s) an einer äußeren Fläche (2S) eines Laufflächenabschnitts (2) angeordnet ist, um so voneinander in einer Reifenumfangsrichtung beabstandet zu sein und sich in eine Richtung zu erstrecken, die die Reifenumfangsrichtung kreuzt, wobei
ein Rippenausbildungsbereich (Y) mit mindestens einer Einwärtsrippe (15, 15a, 15b, 15c), die von einer inneren Fläche (1S) des Laufflächenabschnitts einwärts in eine Reifenradialrichtung vorsteht, in der inneren Fläche des Laufflächenabschnitts vorgesehen ist, **dadurch gekennzeichnet, dass** die mindestes eine Einwärtsrippe (15, 15a, 15b, 15c) sich in eine Richtung, die die axialen Nuten kreuzt, und über axiale Nuteinwärtsbereiche (14Y) einwärts der axialen Nuten in der Reifenradialrichtung erstreckt und
ein Kreuzungswinkel θ der Einwärtsrippe in Bezug auf jede axiale Nut von 45° bis 90° reicht.

2. Luftreifen nach Anspruch 1, wobei jede axiale Nut eine Schulteraxialnut (14s) ist, die sich von einer äußeren Seite eines Laufflächenuntergrundkontaktrands (Te) in eine Reifenaxialrichtung über den Laufflächenuntergrundkontaktrand in Richtung einer Reifengürtellinienseite (Co) erstreckt.

3. Luftreifen nach einem der Ansprüche 1 bis 2, wobei
die Einwärtsrippe eine Umfangsrippe (15b) ist, die sich entlang eines ganzen Umfangs des Reifens in der Reifenumfangsrichtung erstreckt, und
eine Vielzahl von Umfangsrippen in dem Rippenausbildungsbereich angeordnet ist, um so voneinander in der Reifenaxialrichtung beabstandet zu sein.

4. Luftreifen nach einem der Ansprüche 1 bis 3, wobei
die Einwärtsrippe eine geneigte Rippe (15a) ist, die sich erstreckt, um so in einem Winkel a in Bezug auf die Reifenumfangsrichtung geneigt zu sein, der nicht größer als 45° ist, und
eine Vielzahl der geneigten Rippen in dem Rippenausbildungsbereich angeordnet ist, um so voneinander in der Reifenaxialrichtung beabstandet zu sein.

5. Luftreifen nach einem der Ansprüche 1 bis 2, wobei
die Einwärtsrippe eine Spiralrippe (15c) ist, die sich auf eine Spiralweise in der Reifenumfangsrichtung erstreckt, und
die Einzelspiralrippe in dem Rippenausbildungsbereich eine Vielzahl von Malen gewunden ist.

6. Luftreifen nach einem der Ansprüche 1 bis 5, wobei eine Vorstehhöhe Hr der Einwärtsrippe von der inneren Fläche 2,5 bis 7,5 mm ist.

7. Luftreifen nach einem der Ansprüche 1 bis 6, wobei eine Rippenbreite Wr der Einwärtsrippe 2,5 bis 7,5 mm ist.

8. Verfahren eines Herstellens des Luftreifens nach einem der Ansprüche 1 bis 7, wobei das Verfahren die Schritte aufweist:
fortlaufendes Anbringen unvulkanisierter Reifenkomponenten auf einen starren Kern (20), um einen Reifenrohling (1N) auszubilden; und
Stecken des Reifenrohlings zusammen mit dem starren Kern in eine Vulkanisierungsform (21) sowie Vulkanisieren und Formen des Reifenrohlings darin, wobei
der starre Kern an einer äußeren Fläche davon eine Rippenausbildungsnut zum Ausbilden der Einwärtsrippe hat.

## Revendications

1. Pneumatique (1) dans lequel une pluralité de rainures axiales (14, 14s) sont agencées sur une surface extérieure (2S) d'une partie de bande de roulement (2) de façon à être espacées les unes des autres dans une direction circonférentielle de pneu et s'étendent dans une direction coupant la direction circonférentielle de pneu, dans lequel
une région formant nervure (Y) incluant au moins une nervure intérieure (15, 15a, 15b, 15c) qui fait saillie depuis une surface intérieure (1S) de la partie de bande de roulement vers l'intérieur dans une direction radiale de pneu est située dans la surface intérieure de la partie de bande de roulement, **caractérisé en ce que** l'au moins une nervure intérieure (15, 15a, 15b, 15c) s'étend dans une direction coupant les rainures axiales et à travers des régions vers l'intérieur de la rainure axiale (14Y) vers l'intérieur des rainures axiales dans la direction radiale de pneu et
un angle d'intersection θ de la nervure intérieure par rapport à chaque rainure axiale est compris entre 45° et 90°.

2. Pneumatique selon la revendication 1, dans lequel chaque rainure axiale est une rainure axiale d'épaulement (14s) s'étendant depuis un côté extérieur d'un bord de contact sol-bande de roulement (Te) dans une direction axiale de pneumatique au-delà du bord de contact sol-bande de roulement vers un côté équateur de pneumatique (Co).

3. Pneumatique selon l'une quelconque des revendications 1 ou 2, dans lequel
la nervure intérieure est une nervure circonférentielle (15b) s'étendant le long d'une circonférence entière du pneumatique dans la direction circonférentielle de pneumatique, et
une pluralité des nervures circonférentielles sont agencées dans la région de formation de nervure de façon à être espacées les unes des autres dans la direction axiale de pneumatique.

4. Pneumatique selon l'une quelconque des revendications 1 à 23, dans lequel
la nervure intérieure est une nervure inclinée (15a) s'étendant de façon à être inclinée à un angle a par rapport à la direction circonférentielle de pneumatique qui n'est pas supérieur à 45°, et
une pluralité des nervures inclinées sont agencées dans la région de formation de nervure de façon à être espacées les unes des autres dans la direction axiale de pneumatique.

5. Pneumatique selon l'une quelconque des revendications 1 à 2, dans lequel
la nervure intérieure est une nervure spirale (15c) s'étendant en spirale dans la direction circonférentielle de pneumatique, et
la nervure spirale simple est enroulée dans la région de formation de nervure une pluralité de fois.

6. Pneumatique selon l'une quelconque des revendications 1 à 5, dans lequel une hauteur de saillie Hr de la nervure intérieure depuis la surface intérieure est de 2,5 à 7,5 mm.

7. Pneumatique selon l'une quelconque des revendications 1 à 6, dans lequel une largeur de nervure Wr de la nervure intérieure est de 2,5 à 7,5 mm.

8. Procédé de fabrication du pneumatique selon l'une quelconque des revendications 1 à 7, le procédé comprenant les étapes consistant à :
fixer séquentiellement des composants de pneumatique non vulcanisés sur un noyau rigide (20) pour former une pneumatique cru (1N) ; et
mettre le pneumatique cru avec le noyau rigide dans un moule de vulcanisation (21), et vulcaniser et former le pneu cru à l'intérieur, dans lequel
le noyau rigide comprend, sur une surface extérieure de celui-ci, une rainure de formation de nervure pour former la nervure intérieure.
